# DEMANDE DE BREVET EUROPEEN

(11) **EP 0 637 530 A1**
(43) Date de publication de la demande: **08.02.1995**
(21) Numéro de dépôt: 93402018.1
(22) Date de dépôt: 05.08.1993
(51) Int. Cl.: B60S 1/34

(54) **Dispositif d'essuie-glace à carter inséré entre deux flasques prevus sur la tête d'entraînement**

(71) Demandeur: VALEO SYSTEMES D'ESSUYAGE, 78180 Montigny-Le-Bretonneux (FR)
(72) Inventeur: Eustache, Jean-Pierre, F-92160 Antony (FR); Maubray, Daniel, F-92310 Issy-les-Moulineaux (FR)
(74) Mandataire: Martin, Jean-Jacques

(57) **Abrégé**

L'invention concerne un dispositif d'essuie-glace comprenant une tête d'entraînement (110) apte à être entraînée en rotation autour d'un axe d'entraînement (E), un carter (100) articulé à une première extrémité sur cette tête d'entraînement autour d'un axe de débattement (D) s'étendant transversalement audit axe d'entraînement et muni, à sa deuxième extrémité d'une tige porte-balai supportant un balai adapté à venir au contact d'une surface à essuyer, caractérisé en ce que la tête d'entraînement (110) comporte deux flasques (112a, 112b) entre lesquels s'étend un tourillon (121) selon ledit axe de débattement (D), la première extrémité du carter s'étendant entre ces deux flasques pour s'articuler sur ledit tourillon.

## Description

La présente invention concerne le domaine des dispositifs d'essuie-glace, et plus particulièrement les dispositifs d'essuie-glace destinés à l'essuyage d'un pare-brise de véhicule automobile.

Il est connu des dispositifs d'essuie-glace qui comprennent une tête d'entraînement apte à être couplée en rotation avec un arbre d'entraînement et un bras d'essuie-glace comprenant un carter, articulé par une extrémité sur ladite tête d'entraînement autour d'un axe de débattement s'étendant transversalement audit arbre d'entraînement, prolongé à l'autre extrémité par une tige porte-balai engagée dans le carter et portant un balai d'essuyage adapté à venir au contact d'une surface à essuyer.

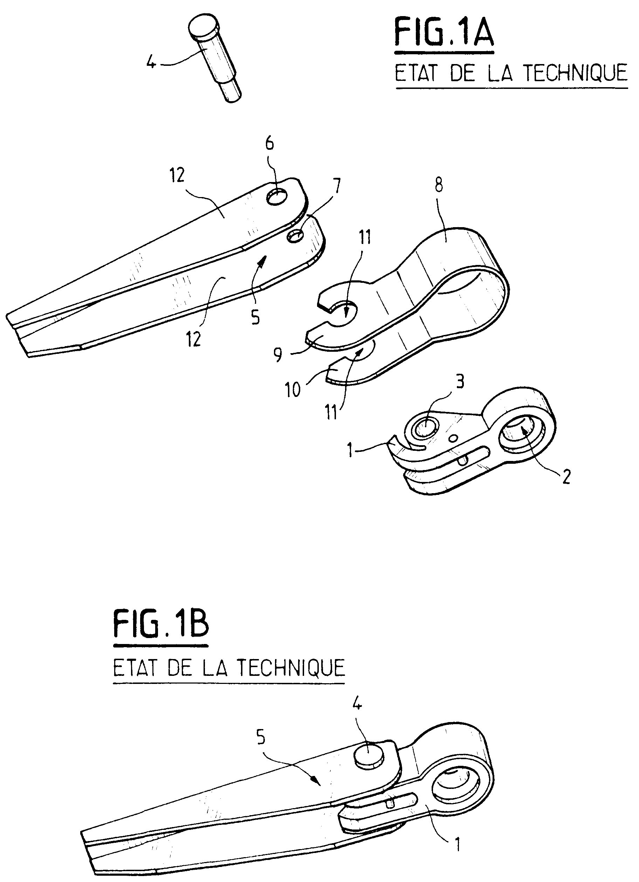

On a représenté sur les figures 1A et 1B illustrant l'état de la technique sur lequel repose l'invention, respectivement en vue éclatée et assemblée, les différents éléments constitutifs d'un dispositif d'essuie-glace connu au niveau de la liaison entre le carter et la tête d'entraînement. On aperçoit sur la figure 1A une tête d'entraînement 1, comprenant un premier alésage 2 destiné à recevoir un arbre d'entraînement non représenté et un deuxième alésage 3, d'axe perpendiculaire au premier, destiné à recevoir un rivet 4 servant de pivot à l'articulation sur la tête d'entraînement 1 d'un carter 5 partiellement représenté. Le carter 5 présente une section transversale ayant généralement la forme d'un U retourné, comprenant deux ailes latérales 12 raccordées à un dos. Deux perçages 6 et 7 sont prévus dans les ailes latérales 12 en regard l'un de l'autre pour recevoir le rivet 4.

Pour des raisons essentiellement esthétiques, un capuchon 8 en matière plastique coiffe la tête d'entraînement 1, ce capuchon 8 étant mis en place sur la tête d'entraînement lors de l'assemblage du carter 5 sur celle-ci, et comprend deux pattes 9 et 10 disposées à l'intérieur du carter, munies chacune d'une ouverture 11 destinée au passage du rivet 4. Le capuchon 8 est ainsi retenu sur la tête d'entraînement 1 grâce aux pattes 9 et 10 lors du rivetage du carter 5 sur la tête d'entraînement 1. Lors de cette opération de rivetage, les pattes 9 et 10, en matière plastique, et donc relativement fragiles, risquent d'être endommagées si les ouvertures 11 sont mal positionnées en regard des perçages 6 et 7 du carter, par pinçage entre les ailes latérales 12 du carter et le corps de la tête d'entraînement 1.

Par ailleurs, on remarque à l'examen de la figure 1B, qu'après assemblage, la tête du rivet 4 fait saillie sur la surface externe du carter 5. Or, la tendance actuelle dans les véhicules automobiles modernes est de rechercher des lignes de carrosserie ou d'accessoires les plus lisses possibles, et la Demanderesse a constaté que les bras d'essuie-glace connus, avec les têtes des rivets en saillie sur la surface externe du carter vont à l'encontre de cette tendance.

La présente invention a pour objet un dispositif d'essuie-glace amélioré, remédiant aux inconvénients précités.

La présente invention propose pour cela, et selon une première caractéristique de l'invention, un dispositif d'essuie-glace comprenant une tête d'entraînement apte à être entraînée en rotation autour d'un axe d'entraînement, un carter articulé à une première extrémité sur cette tête d'entraînement autour d'un axe de débattement s'étendant transversalement audit axe d'entraînement et muni, à sa deuxième extrémité d'une tige porte-balai supportant un balai adapté à venir au contact d'une surface à essuyer, dans lequel la tête d'entraînement comporte deux flasques entre lesquels s'étend un tourillon selon ledit axe de débattement, la première extrémité du carter s'étendant entre ces deux flasques pour s articuler sur ledit tourillon.

D'autres caractéristiques et avantages de la présente invention apparaîtront à la lecture de la description qui va suivre, d'exemples de réalisation non limitatifs de l'invention, et à l'examen du dessin annexé sur lequel :
- les figures 1A et 1B, précédemment décrites, illustrent l'état de la technique sur laquelle l'invention repose,
- la figure 2 est une coupe longitudinale partielle prise dans un plan contenant l'axe de débattement et perpendiculaire à l'axe d'entraînement d'un dispositif d'essuie-glace conforme à un premier mode de réalisation de l'invention,
- la figure 3 est une vue en coupe selon le trait de coupe III-III de la figure 2,
- la figure 4 est une vue en coupe longitudinale partielle prise dans un plan contenant l'axe d'entraînement et perpendiculaire à l'axe de débattement d'un dispositif d'essuie-glace conforme à une deuxième mode de réalisation de l'invention,
- la figure 5 est une vue en coupe selon le trait de coupe V-V de la figure 4.

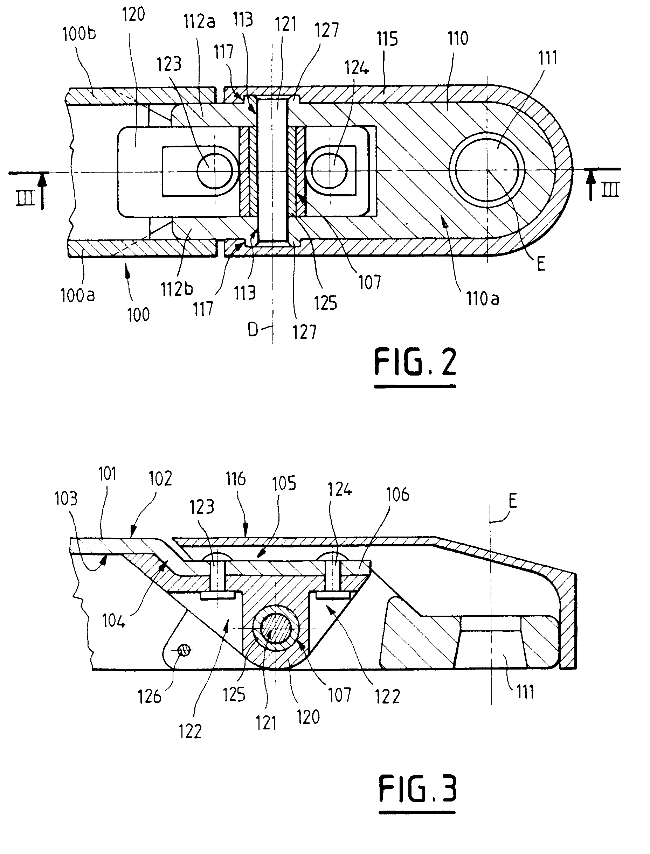

On aperçoit sur la figure 2, partiellement représenté, un dispositif d'essuie-glace comprenant une tête d'entraînement 110, apte à être couplée en rotation avec un arbre d'entraînement non représenté autour d'un axe d'entraînement E, s'étendant perpendiculairement au plan de la figure 2, et un carter de bras d'essuie-glace, référencé dans son ensemble 100, articulé sur la tête d'entraînement à une première extrémité autour d'un axe de débattement D s'étendant transversalement audit axe d'entraînement E et contenu dans le plan de coupe de la figure 2. La tête d'entraînement 110 présente une partie aplatie 110a traversée par un alésage 111 d'axe E et de portée conique apte à recevoir un arbre d'entraînement connu en lui-même et non représenté.

Le carter 100 est muni à son autre extrémité d'une tige porte-balai connue en elle-même et donc non représentée, supportant un balai également connu en lui-même, adapté à venir au contact d'une surface à essuyer. Le carter 100 présente une section transversale ayant généralement la forme d'un U retourné, comprenant deux ailes latérales 100a et 100b raccordées à un dos 101. On référencera pour la suite par 102 la surface externe du dos 101 et par 103 la surface interne du dos 101, s'étendant entre les ailes latérales 100a et 100b.

Conformément à une caractéristique de l'invention, la tête d'entraînement 110 comprend deux flasques 112a et 112b qui prolongent latéralement ladite partie aplatie 110a de la tête d'entraînement 110. Plus précisément, les flasques 112a et 112b s'étendent transversalement à l'axe de débattement D et parallèlement à l'axe d'entraînement E, et sont munis sur leurs faces internes en regard d'alésages traversants 113, en vis-à-vis l'un de l'autre, destinés à accueillir les extrémités axiales d'un tourillon 121 servant de pivot à l'articulation du carter 100 sur la tête d'entraînement 110.

Comme on peut le remarquer à l'examen des figures 2 et 3, le dispositif d'essuie-glace conforme à l'invention comporte un capuchon 115, généralement réalisé en matière plastique, venant coiffer la tête d'entraînement et la première extrémité du carter articulée sur cette tête d'entraînement.

Le capuchon 115 est avantageusement retenu en place sur la tête d'entraînement 110 par complémentarité de formes entre des premiers moyens de montage prévus sur la surface interne du capuchon et des seconds moyens de montage situes sur la surface externe de la tête d'entraînement. De préférence, comme représenté sur les figures 2 et 3 et conformément à une caractéristique avantageuse de l'invention, les premiers moyens de montage sont constitués par des logements cylindriques 117 prévus en regard l'un de l'autre sur la surface interne du capuchon 115, aptes à recevoir des seconds moyens de montage constitués par des renflements cylindriques 127 en saillie sur la surface externe de la tête d'entraînement 110, ces renflements cylindriques 127 bordant les ouvertures extérieures des alésages 113 supportant les extrémités axiales du tourillon 121. La liaison entre le capuchon 115 et la tête d'entraînement 110 permet ainsi avantageusement au capuchon 115 d'être entraîné manuellement en rotation autour de l'axe de débattement D en vue de libérer l'accès à la liaison entre la tête d'entraînement 110 et l'arbre d'entraînement du dispositif d'essuie-glace.

Conformément à une caractéristique de l'invention, la première extrémité du carter articulée sur la tête d'entraînement s'étend entre les deux flasques 112a et 112b pour s'articuler sur le tourillon 121.

Plus particulièrement, conformément au premier mode de réalisation représenté sur les figures 2 et 3, et selon une caractéristique avantageuse de l'invention, le dos 101 du carter 100 se prolonge seul, au niveau de la première extrémité du carter, en avant des ailes latérales 100a et 100b pour former une patte 106 comprenant des moyens d'articulation sur le tourillon 121. Plus précisément, ces moyens d'articulation sont constitués dans le cas des figures 2 et 3 par une pièce intermédiaire 120 rapportée sur la surface inférieure 103 de la patte 106 du carter et traversée par un alésage 107 dans lequel le tourillon 121 est engagé. En variante, les moyens d'articulation pourraient être formés par repliement de la patte 106 sur elle-même pour ménager un logement dans lequel le tourillon 121 serait engagé.

Si l'on examine plus particulièrement la figure 3, on remarque que, conformément à une caractéristique avantageuse de l'invention, la patte 106 du carter 100 se raccorde sur le dos 102 du carter par une partie oblique 104 orientée vers le bas et la patte 106 s'étend entre les flasques de la tête d'entraînement en retrait du plan de la surface supérieure 102 du dos du carter 100, de façon à ménager un espace 105 dans lequel vient se placer la paroi supérieure du capuchon 115, de façon à présenter une surface externe 116 située dans le prolongement de la surface supérieure 102 du dos du carter ; on obtient ainsi une liaison esthétique entre le carter 100 et la tête d'entraînement 110.

De préférence, comme représenté, la pièce intermédiaire 120 est fixée sous la patte 106 et épouse la surface inférieure 103 de celle-ci, vient également s'appliquer sous la partie oblique 104 et sous une partie du dos 101 adjacente à la partie oblique 104. La pièce intermédiaire 120 est fixée sous la patte 106 du carter par l'intermédiaire de deux rivets 123 et 124 engagés à une extrémité dans des perçages prévus à cet effet dans la patte 106 du carter et retenus à l'autre extrémité dans des logements 122 prévus dans la pièce intermédiaire 120, ces logements débouchant sur la partie inférieure de la pièce intermédiaire 120. L'alésage 107 sert de logement à une douille cylindrique 125 servant de palier au tourillon 121.

De préférence, comme représenté sur la figure 2, les ailes latérales 100a et 100b viennent recouvrir les extrémités libres des flasques 112a et 112b de sorte que la surface externe des ailes latérales 100a et 100b du carter 100 et la surface externe de la paroi latérale du capuchon 115 se situent en alignement l'une de l'autre.

Comme on peut le remarquer à l'examen de la figure 3, une tige cylindrique 126 s'étend transversalement à l'axe d'entraînement E entre les deux flasques 112a et 112b, cette tige cylindrique 126 servant à l'accrochage d'un ressort de pression de contact, non représenté, agissant entre la tête d'entraînement et le bras de l'essuie-glace, en vue de presser le balai sur la surface à essuyer.

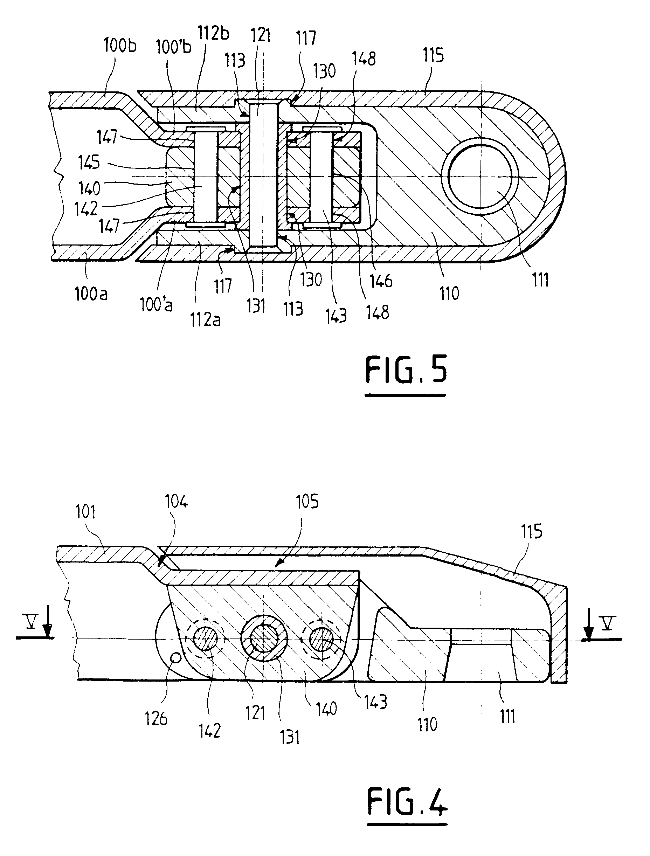

Si l'on se réfère maintenant aux figures 4 et 5 qui illustrent un deuxième mode de réalisation de l'invention, pour lequel on a utilisé les mêmes références numériques que celles des figures 2 et 3 pour des éléments identiques dont la description n'est pas reprise, on remarque que conformément à une caractéristique avantageuse de l'invention, le carter 100 présente, à partir du bord libre de sa première extrémité engagée entre les flasques 112a et 112b de la tête d'entraînement 110 des portions 100'a et 100'b d'ailes latérales rapprochées l'une de l'autre d'une distance inférieure à la distance intérieure entre les deux flasques 112a et 112b. Ces portions 100'a et 100'b sont munies de perçages 130 situés en regard l'un de l'autre dans lesquels est engagé le tourillon 121 servant de pivot à l'articulation du carter 100 sur la tête d'entraînement 110.

Conformément à une autre caractéristique avantageuse de l'invention, une pièce formant entretoise 140 est disposée entre les portions rapprochées 100'a et 100'b des ailes latérales du carter engagées entre les deux flasques 112a et 112b de la tête d'entraînement 110. De préférence, cette pièce formant entretoise 140 est traversée par un alésage 141 dont les ouvertures cylindriques débouchent en regard des perçages 130 et dans lequel le tourillon 121 d'articulation du carter sur la tête d'entraînement est engagé. Le tourillon 121 est supporté de préférence comme représenté par une douille 131 servant de palier, engagée dans l'alésage 141 et dans les perçages 130, munie a ses extrémités axiales d'une collerette radiale faisant saillie radialement sur la surface externe de la douille, et dont les flancs transversaux s'interposent entre la surface interne des flasques 112a et 112b et la surface externe des portions rapprochées 100'a et 100'b des ailes latérales 100a et 100b. La pièce 140 formant entretoise est maintenue entre les deux portions rapprochées 100'a et 100'b des deux ailes latérales 100a et 100b du carter 100 par l'intermédiare de deux rivets 142 et 143 à tête plate disposés de part et d'autre de l'alésage central, ces rivets 142 et 143 étant engagés dans des alésages 145 et 146 situés dans le plan contenant l'axe de débattement D et perpendiculaire à l'axe d'entraînement E. Des perçages 147 et 148 correspondants sont prévus en regard des ouvertures cylindriques de ces alésages 145 et 146 sur les portions rapprochées 100'a et 100'b des ailes latérales du carter. Pour les mêmes raisons esthétiques que celles précédemment mentionnées en référence aux figures 2 et 3, la surface externe du dos de l'extrémité du carter engagée entre les flasques 112a et 112b s'étend en retrait de la surface externe du dos du reste du carter disposé en dehors de la tête d'entraînement pour ménager un dégagement 105 permettant à la surface externe supérieure du capuchon de se situer dans le prolongement de la surface externe du dos du carter, étant bien entendu que les portions rapprochées 100'a et 100'b du carter 100 ménagent en regard de leur surface externe des dégagements dans lesquels se positionne la paroi latérale du capuchon 115, de sorte que la surface externe latérale du capuchon se situe également dans le prolongement de la surface externe des ailes latérales 100a et 100b du carter 100.

Le capuchon 115 est retenu sur la tête d'entraînement 110 par complémentarité de formes entre des premiers moyens de montage moulés de formation sur la surface interne du capuchon et des seconds moyens de montage prévus sur la tête d'entraînement. Ces premiers et seconds moyens de montage sont identiques à ceux du premier mode de réalisation précédemment décrit.

On remarquera à l'examen de la figure 4, qu'il est également prévu une tige 126 d'accrochage d'un ressort de pression de contact, ce ressort de pression de contact agissant entre la tête d'entraînement et le bras de l'essuie-glace en vue de presser le balai sur la surface à essuyer.

Finalement, un dispositif d'essuie-glace conforme à la présente invention permet d'obtenir une liaison esthétique entre la tête d'entraînement et le reste du dispositif d'essuie-glace. En abritant les extrémités du tourillon 121 servant de pivot à l'articulation du carter sur la tête d'entraînement on réduit également les possibilités de corrosion par rapport aux dispositifs selon l'art antérieur dans lesquels les têtes du rivet servant de pivot à l'articulation font saillie sur la surface externe du carter.

## Revendications

1. Dispositif d'essuie-glace comprenant une tête d'entraînement (110) apte à être entraînée en rotation autour d'un axe d'entraînement (E), un carter (100) articulé à une première extrémité sur cette tête d'entraînement autour d'un axe de débattement (D) s'étendant transversalement audit axe d'entraînement et muni, à sa deuxième extrémité d'une tige porte-balai supportant un balai adapté à venir au contact d'une surface à essuyer, caractérisé en ce que la tête d'entraînement (110) comporte deux flasques (112a, 112b) entre lesquels s'étend un tourillon (121) selon ledit axe de débattement (D), la première extrémité du carter s'étendant entre ces deux flasques pour s'articuler sur ledit tourillon.

2. Dispositif d'essuie-glace selon la revendication 1, caractérisé en ce que le carter (200) présente une section transversale ayant généralement la forme d'un U retourné, comprenant deux ailes latérales (100a, 100b) raccordées à un dos (101).

3. Dispositif d'essuie-glace selon la revendication 2, caractérisé en ce que le dos (101) du carter (100) se prolonge seul, au niveau de la première extrémité du carter, en avant des ailes latérales pour former une patte (106) et en ce que des moyens d'articulation (120) sur ledit tourillon sont prévus sur la patte.

4. Dispositif d'essuie-glace selon la revendication 3, caractérisé en ce que lesdits moyens d'articulation sont constitués par une pièce intermédiaire (120) rapportée sur la surface inférieure de la patte (106) du carter et traversée par un alésage (107) dans lequel le tourillon est engagé.

5. Dispositif d'essuie-glace selon la revendication 3, caractérisé en ce que lesdits moyens d'articulation sont formés par repliement de la patte (106) sur elle-même pour ménager un logement dans lequel le tourillon (121) est engagé.

6. Dispositif d'essuie-glace selon la revendication 2, caractérisé en ce que le carter présente, à partir du bord libre de sa première extrémité engagée entre les flasques de la tête d'entraînement des portions d'ailes latérales rapprochées (100'a, 100'b) l'une de l'autre d'une distance inférieure à la distance intérieure entre les deux flasques, chaque portion rapprochée étant en outre munie d'un perçage servant au passage dudit tourillon.

7. Dispositif d'essuie-glace selon la revendication 6, caractérise en ce qu'une pièce (140) formant entretoise est disposée entre les portions rapprochées (100'a, 100'b) des ailes latérales engagées entre les deux flasques de la tête d'entraînement.

8. Dispositif d'essuie-glace selon la revendication 7, caractérisé en ce que ladite pièce formant entretoise (140) est traversée par un alésage (141) dans lequel le tourillon (121) est engagé.

9. Dispositif d'essuie-glace selon l'une des revendications 2 à 8, caractérisé en ce que le dos du carter s'étend au niveau de la première extrémité engagé entre les flasques de la tête d'entraînement, en retrait par rapport au plan du reste du dos du carter.

10. Dispositif d'essuie-glace selon l'une des revendications 1 à 9, caractérisé en ce qu'il comporte un capuchon (115) en matière plastique qui est apte à venir coiffer la tête d'entraînement et la première extrémité du carter engagée entre les flasques (112a, 112b) de la tête d'entraînement (110) de sorte que la surface externe du capuchon se situe, lorsque le balai d'essuie-glace repose sur la surface à essuyer, sensiblement dans le prolongement de la surface externe du carter.

11. Dispositif d'essuie-glace selon la revendication 10, caractérisé en ce que ledit capuchon est retenu sur la tête d'entraînement par complémentarité de formes entre des premiers moyens de montage (117) prévus sur la surface interne du capuchon et des seconds moyens de montage (127) situés sur la surface externe de la tête d'entraînement.
